# EUROPEAN PATENT SPECIFICATION

(11) **EP 2 165 853 B1**
(45) Date of publication and mention of the grant of the patent: **18.01.2012**
(21) Application number: 09170514.5
(22) Date of filing: 17.09.2009
(51) Int. Cl.: B60C 1/00, B60C 13/00, C08K 3/04, C08L 7/00, B60C 19/08, C08L 21/00

(54) **Tire with a thin outer sidewall rubber layer**
Reifen mit einer dünnen Außenseitenwandgummischicht
Pneu avec fine couche de caoutchouc latérale externe

(30) Priority: 19.09.2008 US 233700
(43) Date of publication of application: 24.03.2010
(73) Proprietor: The Goodyear Tire & Rubber Company, Akron, OH 44316-0001 (US)
(72) Inventor: Burkholder, Karen Elaine, 44281, OH Wadsworth (US); Weydert, Marc, L-8020, Strassen (LU)
(74) Representative: Kutsch, Bernd

(56) References cited:
- EP-A1- 1 454 765
- EP-A1- 1 533 144
- DATABASE WPI Week 200838 Thomson Scientific, London, GB; AN 2008-F98873 XP002559147 & KR 100 771 684 B1 (KUMHO TIRE CO INC) 24 October 2007 (2007-10-24)

## Description

### Field of the Invention

A pneumatic rubber tire with a thin carbon black reinforced outer rubber sidewall layer. Such sidewall is intended to promote a path of least electrical resistance.

### Background of the Invention

Tire rubber sidewalls are generally reinforced with rubber reinforcing carbon black which, in general, provides an adequate path of least electrical resistance, particularly on its peripheral outer surface, between its tread and wheel rim-contacting portion of the tire to aid in dissipating static electricity to enable the electrical energy to travel from the vehicular wheel rim (on which the tire is mounted) to the tire tread running surface and thence to the ground.

In practice, where a tire sidewall rubber composition contains at least 35 and more generally at least 40 phr (parts by weight per 100 parts by weight rubber) of rubber reinforcing carbon black, it provides an adequate path of electrical conductivity.

In general, if the sidewall portion of the tire is of equal electrical conductivity, the electrical energy tends to travel in or through the outer peripheral portions of the tire sidewall.

In contrast to more conventional tire sidewall rubber layers, it is proposed to provide a tire with an outer tire rubber sidewall layer which is configured with a thin cross-section and a relatively small cross-sectional rubber volume.

It is considered herein that the path of least electrical resistance through the outer sidewall rubber layer may be somewhat compromised because of such relatively small outer sidewall layer cross-section and associated relatively small cross-sectional rubber volume.

Accordingly, it is desired to provide such thin sidewall rubber layer with an enhanced path of least electrical resistance by addition of an electrical resistivity-reducing carbon black to the sidewall rubber composition, in contrast to what is more commonly referred to as "rubber reinforcing carbon black", without significantly degrading desirable physical properties of the tire sidewall rubber.

US-A- 2,339,546 relates to a tire which contains an element as an electrically conductive rubber composition of which one terminus of the element is positioned in the tire bead portion and adapted to be in electrically conducting relation with a tire rim and the element extends on the outside of the tire body and around the tire shoulder to the other terminus of the element in the face of the tire tread with a protective sidewall covering a portion of the outer surface of the element.

US-A- 5,173,135 relates to a radial passenger tire with a sidewall having a volume resistivity of not more than 10⁴ ohm-cm achieved by using an electrically conductive carbon black characterized by having a dibutyl phthalate (DBP) absorption value of from 90 to 130 cc/100g and a surface area by nitrogen absorption in a range of from 100 to 150 m²/g.

EP-A- 1 454 765 discloses a rubber composition for a tire sidewall. The composition comprises diene-based elastomers, 30 phr of rubber reinforcing carbon black, and 2 to 20 phr for a second particulate electrically conductive rubber carbon black having a DBP value in a range of from 170 to 600 ml/100g.

In the description of this invention, the term "phr" relates to parts by weight of an ingredient per 100 parts by weight of rubber, unless otherwise indicated.

The terms "rubber" and "elastomer" are used interchangeably unless otherwise indicated. The terms "vulcanized" and "cured" are used interchangeably unless otherwise indicated. The terms "compound" and "rubber composition" may be used interchangeably unless indicated. The term "carbon black" is used to refer to rubber reinforcing carbon blacks unless otherwise indicated. Exemplary rubber reinforcing carbon blacks may be referred to, for example, in The Vanderbilt Rubber Handbook (1987) on Pages 414 through 417.

### Disclosure and Practice of the Invention

The invention relates to a tire according to claim 1.

Dependent claims refer to preferred embodiments of the invention.

In accordance with this invention, a pneumatic rubber tire is provided with a sidewall having a preferably annular outer rubber layer with an average thickness (gage, or axial cross-section) in a range of from 2 to 5 millimeters.

The rubber composition of said outer rubber sidewall layer contains, based upon parts by weight per 100 parts by weigh rubber (phr):
(A) at least 40 phr of rubber reinforcing carbon black, and
(B) 1 to 10, alternately from 2 to 5, and further alternately from 1 to 3, phr of carbon black (electrical conductivity promoting specialized carbon black other than conventional rubber reinforcing carbon black) having an lodine absorption value (ASTM D1510) in a range of from 700 to 1150, alternately from 950 to 1150, g/kg, a DBP (dibutylphthate) absorption value (ASTM D2414) in a range of from 300 to 550, alternately from 320 to 420, cc/100g and optionally further a nitrogen surface area in a range of from 850 to 1000 m²/g.

In practice, the sidewall rubber composition is intended to provide a path of least electrical resistance for the tire sidewall in said outer sidewall rubber layer of said tire.

In practice, it is desired that the inclusion of the specialized carbon black in the rubber reinforcing carbon black-containing rubber composition for the tire sidewall does not significantly dilute physical properties of the sidewall rubber composition such as abrasion resistance, flex fatigue and surface cracking of the rubber composition, a determination of which is subject to experimental evaluation herein.

Accordingly, to achieve such beneficially desired results, an electrical conductivity promoting carbon black is preferred which has a significantly greater minimum nitrogen surface area of 850 m²/g (therefore a significantly smaller particle size) as compared to a maximum nitrogen surface area value of 150 m²/g and, further, a minimum DBP value of 300, alternately a minimum DBP value of 320, cc/100g (and thus a significantly higher structured carbon black) as compared to a maximum DBP value of 130 cc/100g.

In practice, said rubber composition which contains the rubber electrical volume resistivity reduction promoting (electrical conductivity promoting) carbon black inclusion desirably has, for example, an electrical volume resistivity of less than about 2E4 ohm-cm (less than 20,000 ohm-cm).

Historically, rubber reinforcing carbon blacks typically used for tire sidewall rubber compositions are usually of a somewhat larger particle size than carbon blacks conventionally used for tire tread rubber compositions. Such carbon blacks for reinforcing tire sidewall rubber compositions are, for example, those with ASTM designations of N550, N326 and N330. Rubber compositions containing rubber reinforcing carbon blacks for tire components typically have a content of at least 35, alternately at least 40, phr of the rubber reinforcing carbon black in the respective rubber composition.

Representative examples of carbon blacks (specialized carbon blacks) which considered herein as candidates for promoting electrical conductivity of rubber compositions (promoting a reduction in electrical volume resistivity) are, for example, Printex XE-2™ series of carbon blacks from Evonik Degussa GmbH reportedly having an Iodine absorption (or adsorption) value (ASTM D1510) of 1075 g/kg, and a DBP value of 380 cc/100g; which may have a nitrogen surface area (BET) value of 910 m²/g. (e.g. envisioned herein as having an Iodine value in a range of from 950 to 1150 g/kg, DBP value in a range of from 320 to 420 cc/100g and which may have a nitrogen surface area (BET) value in a range of from 850 to 1,000 m²/g).

Additional examples of carbon blacks for promoting electrical conductivity of rubber compositions are, for example, Ketjen EC600J™ and Ketjen EC300J™ from the AKZO Company reportedly having an Iodine absorption value of 1040 (e.g. 1000 to 1100), and 800 (e.g. 740 to 840) g/kg, respectively together with a DBP value of 550 and 360 cc/100g, respectively.

Further examples are Vulcan XC-7A™ from the Cabot Corporation, reportedly having an Iodine value of 253 to 270 together with a DBP value of 175 to 178 cc/100g; which may have a nitrogen surface area value of 254 m²/g; 23MM™ from the 3M Company reportedly having an Iodine value of 600 together with a DBP value of 300 cc/100g; which may have a nitrogen surface area value of 558 m²/g, and Corax XE2™ from Evonik Degussa, reportedly having an Iodine value of 1000 cc/100g together with a DBP value 400 cc/100g; which may have a nitrogen surface area value of 560 m²/g.

It is to be appreciated that the aforesaid Iodine absorption values and DBP values of the referenced carbon blacks which promote electrical conductivity in rubber compositions (which may therefore be referred to herein as "electrically conductive carbon blacks") differ significantly from Iodine absorption values and DBP values of more conventional rubber reinforcing carbon blacks, particularly rubber reinforcing carbon blacks often used for tire rubber sidewalls. Rubber reinforcing carbon blacks typically used for tire sidewall rubber compositions may have, for example, Iodine values in a range of from 40 to 85 g/kg and DBP values in a range of from 70 to 125 cc/100g.

Conventional rubber reinforcing carbon blacks, in general, may be, for example, carbon blacks listed in The Vanderbilt Rubber Handbook, (1978), Page 417, according their ASTM designated "N" number with associated Iodine values and DBP values. For example, such reported Iodine absorption values may range, for example, from 20 to 205 m²/g and reported DBP values may range, for example, from 62 to 150 cc/100g.

### Brief Description of the Drawings

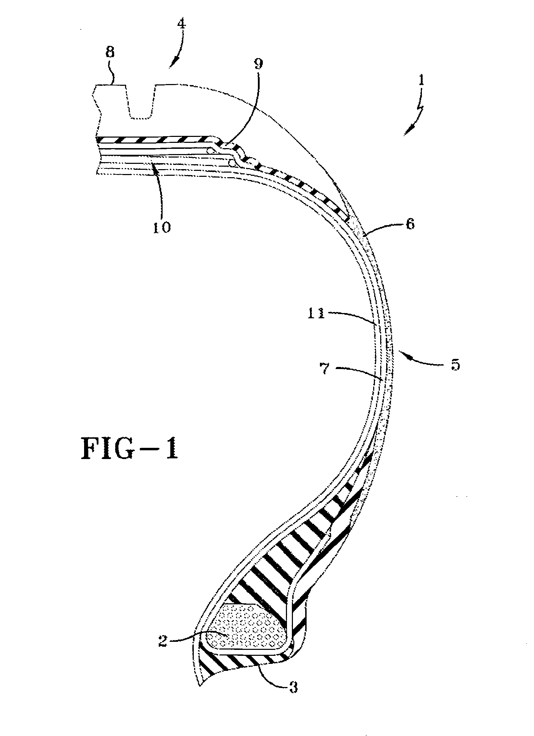

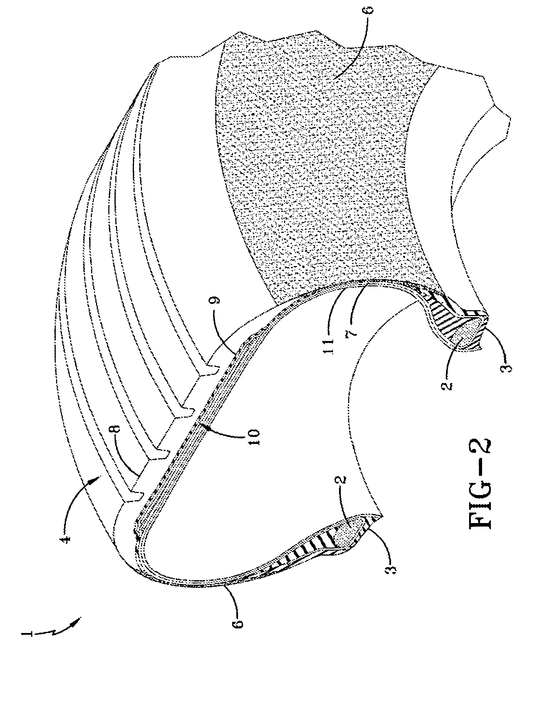

Drawings are provided herewith as Figure 1 and Figure 2. Figure 1 represents a cross-section of a portion of an open toroidally shaped pneumatic tire which depicts a thin outer rubber sidewall layer and Figure 2 depicts a perspective view of the tire depicting the thin outer sidewall wall as an annular rubber layer.

### The Drawings

Referring to FIGURE 1 a cross-section of an open toroidally shaped tire 1 are presented with two spaced apart bead portions 2, which contain a vehicular wheel rim-contacting rubber component 3, (e.g. tire chafer component) designed to contact a rigid metal vehicular wheel rim (not shown) onto which the tire is to be mounted to form a tire/rim assembly and thereby create an enclosed, air-containing cavity, a circumferential rubber tread 4 preferably of a cap/base construction, rubber sidewalls 5 extending radially outward from said bead portion 2 and chafer 3 components to and connecting with the peripheral edges of the tread 4.

In the drawings, the tire sidewall 5 has a thin outer (peripheral) visible rubber layer 6 having an average axial cross-sectional thickness of 2.5 mm (millimeters) or in a range of from 2 to 3 mm.

For the drawings, the peripheral thin sidewall layer 6 is of a rubber composition having a relatively low electrical volume resistivity of less than 2E4 ohm-cm (less than 20,000 ohm-cm). For such purpose, the rubber composition contains 2.5 phr of an electrical conductivity promoting carbon black having an Iodine absorption value in a range of 950 to 1150 g/kg, a DBP absorption value in a range of from 320 to 420 cc/100g and a nitrogen surface area (BET) value in a range of from 850 to 1,000 m²/g).

The BET method of nitrogen surface area determination is well known to those having skill in such art. For example, a BET method of nitrogen surface determination might be described in the Journal of the American Chemical Society, Volume 60 (1938).

For this drawing, the rubber composition for the peripheral outer sidewall rubber layer 6 comprises conjugated diene-based elastomers composed of a combination of cis 1,4-polybutadiene rubber and cis 1,4-polyisoprene rubber, particularly natural cis 1,4-polyisoprene rubber, and such rubber composition may further optionally contain styrene/butadiene rubber (SBR).

The depiction of the tire 1 also includes the cap 8 and base 9 tread layers, circumferential cord reinforced rubber belts 10 underlying the tread base layer 9 as well as cord (synthetic fiber or steel cord based) reinforced rubber carcass plies 7 in the sidewall area and underlying the thin peripheral sidewall layer 6 and a gum rubber tire innerliner layer 11. For this drawing, the thin peripheral sidewall rubber layer 6 overlays a rubberized cord reinforced carcass ply 7, wherein the rubber composition of the carcass ply 7 has an electrical volume resistivity of greater than 2E4 (greater than 20,000) ohm-cm to thereby enable the outer sidewall rubber layer 6 to provide a path of least electrical resistance for the tire sidewall. The underlying tire sidewall rubber composition contains conventional rubber reinforcing carbon reinforcement without the aforesaid electrical conductivity promoting (electrical volume resistivity reduction promoting) carbon black.

It is considered herein that the relatively lower electrical volume resistivity of the peripheral thin sidewall layer (6) enables a path of least electrical resistance for the outer thin sidewall layer (6) in preference to the rubber composition of the underlying carcass plies (7).

Accordingly, it is seen herein that the outer thin peripheral sidewall rubber layer (6) provides a path of least electrical volume resistivity on the outer portion of the tire sidewall (5).

It is envisioned herein the inclusion of said electrically conductivity promoting carbon black in the outer sidewall layer can provide the outer sidewall layer with a relatively greater electrical conductivity (relatively lower electrical volume resistivity) and therefore a suitable path of least electrical resistance. However, it was not known whether the inclusion of such carbon black in the rubber composition would significantly dilute or significantly degrade important physical properties of the rubber composition for the outer tire sidewall layer.

It is readily understood by those having skill in the art that the rubber compositions of the respective components of the tire would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, resins including tackifying resins, and plasticizers, fillers, pigments, fatty acid, zinc oxide, waxes, antioxidants and antiozonants and reinforcing materials such as, for example, the hereinbefore discussed carbon black and silica. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, might comprise 0.5 to 10 phr. Typical amounts of processing aids, if used, might for example be used in an amount of from 1 to 20 phr. Typical amounts of antioxidants, where used, might be for example, 1 to 5 phr. Representative antioxidants, where used, might be, for example, diphenyl-p-phenylenediamine and others, such as, for example, those disclosed in The Vanderbilt Rubber Handbook (1978), Pages 344 through 346. Typical amounts of antiozonants might be for example 1 to 5 phr. Typical amounts of fatty acids, if used, can include stearic acid comprise, for example, 0.5 to 3 phr. Typical amounts of zinc oxide may be, for example, 2 to 6 phr. Typical amounts of waxes, if used, might be, for example, from 1 to 5 phr. Typical amounts of peptizers, if used, might be for example from 0.1 to 1 phr. Typical peptizers might be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents might be used for example in an amount ranging from 0.5 to 4 phr.

Accelerators are used to control the time and/or temperature required for vulcanization and to improve the properties of the vulcanizate. In one embodiment, a single accelerator system might be used, i.e., primary accelerator. Conventionally, a primary accelerator is used in amounts ranging, for example, from 0.5 to 2.0 phr. In another embodiment, combinations of two or more accelerators might be used in which the primary accelerator is generally used in the larger amount (0.5 to 2 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that might be used are, for example, amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention unless otherwise indicated.

Sometimes one or more of the antioxidants and antiozonants may be more simply referred to as antidegradants.

The tire can be built, shaped, molded and cured by various methods which will be readily apparent to those having skill in such art.

The prepared tire of this invention is conventionally shaped and cured by methods known to those having skill in such art.

The following example is provided to further illustrate a portion of the invention. The parts and percentages are by weight unless otherwise indicated.

### EXAMPLE I

An experimental rubber sample was prepared to evaluate whether its electrical volume resistivity could be reduced by an inclusion of an electrical conductivity promoting carbon black (other than a conventional rubber reinforcing carbon black) in a rubber reinforcing carbon black containing rubber composition which contains at least 35 phr, namely 42.5 and 45 phr, of rubber reinforcing carbon black reinforcement, while substantially maintaining significant rubber physical properties of the rubber composition.

For this Example, a control rubber composition containing reinforcement as a rubber reinforcing carbon black was prepared and referred to herein as rubber Sample A.

Experimental rubber compositions were prepared which contained a small amount of an electrical conductivity promoting carbon black, in addition to, or as a partial substitution for, the rubber reinforcing carbon black, and identified herein as rubber Samples B, C and D.

Ingredients for the rubber Samples are illustrated in the following Table 1. The ingredients were mixed in an internal rubber mixer as a first non-productive mixing step, to the exclusion of sulfur and vulcanization accelerator, for 4.5 minutes to a temperature of 160°C, dumped from the mixer, sheeted out from an open roll mill and allowed to cool below 40°C and than mixed in a productive mixing step, in which sulfur and vulcanization accelerator are added, for 2.2 minutes to a temperature of 110°C. The use of sequential non-productive and productive mixing steps are well known to those having skill in such art.

**Table 1**

| Material | Parts | | | |
|---|---|---|---|---|
| | Control Sample A | Sample B | Sample C | Sample D |
| ***Non-Productive Mixing (160°C)*** | | | | |
| Natural cis 1,4-polyisoprene rubber, and cis 1,4-polybutadiene rubber¹ | 100 | 100 | 100 | 100 |
| Rubber reinforcing carbon black (N347)² | 45 | 42.5 | 45 | 45 |
| Carbon black promoting a rubber with low electrical resistivity³ | 0 | 2.5 | 2.5 | 5 |
| Processing oil and waxes | 6 | 6 | 6 | 6 |
| Zinc oxide | 3 | 3 | 3 | 3 |
| Fatty acid (stearic and palmetic acids) | 1 | 1 | 1 | 1 |

| ***Productive Mixing (115°C)*** | | | | |
|---|---|---|---|---|
| Sulfur | 1 | 1 | 1 | 1 |
| Rubber sulfur cure accelerators | 2 | 2 | 2 | 2 |
| Amine based antidegradant | 2 | 2 | 2 | 2 |

| | | | | |
|---|---|---|---|---|
| ¹The same rubber blend was used for rubber Samples A, B, C and D. ²N347 rubber reinforcing carbon black is an ASTM designation for a rubber reinforcing carbon black reportedly having an iodine value of approximately 270 m²/g, DBP (dibutylphthalate) value of approximately 178 cc/100g and a nitrogen surface area (BET) of approximately 254 m²/g. ³Low rubber electrical volume resistivity promoting carbon black as Printex XE2™ from Evonic Degussa GmbH reportedly having an Iodine absorption value of 1075 g/kg and a DBP value of 380cc/100g as well as a nitrogen surface area (BET) of 910 m²/g. | | | | |

The physical properties of Experimental rubber Samples B, C and D were compared to the physical properties of the Control rubber Sample A, with the properties of Control rubber Sample A normalized to a value of 100, as illustrated in the following Table 2.

**Table 2**

| Material | | | | |
|---|---|---|---|---|
| | Control Sample A | Sample B | Sample C | Sample D |
| Low rubber resistivity carbon | 0 | 2.5 | 2.5 | 5 |
| black, phr | | | | |
| Rubber reinforcing carbon black | 45 | 42.5 | 45 | 45 |
| (N347), phr | | | | |

| ***Properties*** | | | | |
|---|---|---|---|---|
| Minimum torque (dNm) | 100 | 109 | 113 | 139 |
| Maximum torque (dNm) | 100 | 106 | 108 | 121 |

| ***ATS Stress Strain¹*** | | | | |
|---|---|---|---|---|
| 300% modulus (MPa) | 100 | 105 | 114 | 121 |
| Ultimate tensile strength (MPa) | 100 | 101 | 104 | 98 |
| Ultimate elongation (%) | 100 | 97 | 97 | 91 |
| Rebound (23°C) | 100 | 98 | 98 | 92 |

| ***Flex fatigue, ASTM D4482*** | | | | |
|---|---|---|---|---|
| (No of cycles to rupture)² | 100 | 91 | 129 | 101 |
| Rotary Drum Abrasion³, | 100 | 96 | 81 | 85 |
| (relative volume loss) ASTM | | | | |
| D5963, DIN53516 | | | | |
| Pierced groove flex, ASTM D813 (cut length, mm, at 240 minutes)⁴ | 100 | 82 | 94 | 88 |
| Electrical Volume Resistivity ASTM D257-98, ohm-cm (lower is better) | 4.7E4 (47,500) | 1.3E4 | 1.4E4 | 3.0E3 |

| | | | | |
|---|---|---|---|---|
| ¹Data obtained according to Automated Testing System instrument (referred to in the Table as "ATS") of the Instron Corporation which incorporates a number of tests in one system or instrument. ² Dynamic flex fatigue, number of cycles to failure (a greater number of cycles to failure is better in a sense of showing greater resistance to dynamic flex fatigue). ³The abrasion test is indicative of rubber wear (volume rubber loss) due to abrasion. (Lower values are better in a sense of showing greater resistance to abrasion) The abrasion test is well known to those skilled in such art. The abrasion value is reported as a relative volume loss compared to a control. A higher value is indicative of a larger amount of rubber removed by abrasion and, thus, a greater amount of wear for the rubber sample. ⁴Crack growth resistance measured by a Pierced Groove Flex test conducted at 93°C at 360 cycles/min using a conical piercing needle 1/32" in diameter using a 6" x 1.5" x 0.25" sample using 180° flex wherein the flex region is a 1/4" diameter molded groove against the grain of the sample. The results are reported in terms of millimeters of crack growth after 240 minutes. (Lower values are better in a sense of showing less crack propagation) | | | | |

In Table 2 it can be seen that for Experimental rubber Sample B, which contained 2.5 phr of the electrical resistivity reduction promoting carbon black for the rubber composition:
(A) the electrical volume resistivity was reduced by a factor of at least 3.5;
(B) the flex fatigue value (cycles to failure) was similar to Control Rubber Sample A;
(C) the abrasion value (reduction on volume loss) was beneficially reduced, thereby indicating an increased abrasion resistance and
   (4) the pierced groove value (extent of crack growth propagation) was beneficially reduced, thereby indicating an increased resistance to cut growth propagation.

The complexity of the beneficial results for the physical properties for the rubber composition of Experimental Sample B is not fully understood. For example, a combination of the significantly increased carbon black nitrogen surface area from 254 to 910 m²/g; the significant increase of the carbon black structure, namely the increase of the DBP value from 178 to 380 cc/100g, and the significant increase in Iodine value from 270 to 1075 g/kg may need in some way to be taken into consideration for the combined effect on the indicated physical properties of the rubber composition for Experimental Sample B in complex ways, the result of which is considered herein to be uncertain without the above experimentation.

Therefore it is concluded herein that, by this experiment, the electrical volume resistivity could be significantly reduced without significantly diluting, or reducing, the indicated physical properties of the rubber composition and that, surprisingly, one or more of such properties may actually be beneficially affected while also significantly reducing its electrical volume resistivity by the inclusion of a small amount of the indicated carbon black.

From Table 2 it can further be seen that for Experimental rubber Samples C and D, which contained 2.5 and 5 phr, respectively, of the lower electrical resistivity promoting carbon black for the rubber composition:
(A) the electrical volume resistivity was reduced by a factor of at least 3 and 15, respectively;
(B) the flex fatigue values (increase of cycles to failure) were beneficially increased, thereby indicating an increased resistance to flex fatigue;
(C) the abrasion values (reduction of volume loss) were beneficially reduced, thereby indicating an increased abrasion resistance, and
(D) the pierced groove values (extent of crack growth propagation) were beneficially reduced, thereby indicating an increased resistance to cut growth propagation.

As was indicated above for Experimental B, the complexity of the beneficial results for the physical properties for Experimental rubber Samples C and D is not fully understood. As discussed above for Experimental rubber Sample B, for example, a combination of the significantly increased carbon black nitrogen surface area from 254 to 910 m²/g; the significant increase of the carbon black structure, namely the increase of the DBP value from 178 to 380 cc/100g, and the significant increase in Iodine value from 270 to 1075 g/kg may need in some way to be taken into consideration for the combined effect on the indicated physical properties of the rubber compositions of Samples C and D in complex ways, the result of which is considered herein to be uncertain without the above experimentation.

Therefore it is concluded herein that, by this experiment, the electrical volume resistivity could be significantly reduced without significantly diluting, or reducing, the indicated physical properties of the rubber composition of Experimental rubber Samples C and D and that, surprisingly, the indicated physical properties for Experimental rubber Samples C and D were actually beneficially affected while also significantly reducing their electrical volume resistivities by the inclusion of the small amounts of the indicated carbon black which has a combination of iodine and DBP values which are not considered to be conventional rubber reinforcing carbon black values.

It is important to appreciate that the evaluation provided by this Example demonstrated the importance of the inclusion in the rubber composition of the specialized carbon black having an Iodine absorption value of 1075 g/kg and a DBP value of 380cc/100g as well as a nitrogen surface area (BET) of 910 m²/g.

It is considered herein that such evaluation justifies use of a specialized electrical conductivity promoting carbon black to provide a sidewall rubber composition with a combination of acceptable electrical volume electrical resistance (and to thereby provide a path of least electrical resistance in the outer sidewall rubber layer) while surprisingly also promoting acceptable physical properties for the sidewall rubber composition where the specialized carbon black is characterized by having a combination of a minimum Iodine absorption value of 700 (alternately at least 950) g/kg, a minimum DBP absorption value of 300 (alternately at least 320) cc/100g and a minimum nitrogen surface area of 850 m²/g.

This is considered herein to be a significant discovery where the specialized carbon black is used which is readily distinguished from a carbon black which, in contrast, has a maximum dibutyl phthalate (DBP) absorption value of only 130 cc/100g and which, in contrast, has a maximum nitrogen surface area of only 150 m²/g.

## Claims

1. A pneumatic rubber tire with a sidewall (5) having an outer rubber layer (6) with a an average thickness in a range of from 2 to 5 millimeters, wherein the rubber composition of said outer rubber sidewall layer (6) contains, based upon parts by weight per 100 parts by weigh rubber (phr):
(A) at least 40 phr of rubber reinforcing carbon black, and
(B) 1 to 10 phr of carbon black having an Iodine absorption value (ASTM D1510) in a range of from 700 to 1150 g/kg and a DBP (dibutylphthate) absorption value (ASTM D2414) in a range of from 300 to 550 cc/100g,
and wherein the outer rubber layer (6) has an electrical volume resistivity of less than 20 000 ohm-cm.

2. The tire of claim 1 wherein said carbon black further has a nitrogen surface area (BET) in a range of from 850 to 1000 m²/g.

3. The tire of claim 1 or 2 wherein the said outer rubber sidewall layer (6) overlays a cord reinforced rubber carcass ply (7) wherein the rubber composition of said carcass ply (7) has an electrical volume resistivity of greater than 20,000 ohm-cm.

4. The tire of at least one of the previous claims wherein said rubber composition of said outer rubber sidewall layer (6) provides a path of least electrical resistance for the tire sidewall (5) in the said outer sidewall rubber layer (6).

5. The tire of at least one of the previous claims wherein said carbon black has an Iodine absorption value in a range of from 950 to 1150 g/kg together with a DBP value in a range of from 320 to 420 cc/100g.

6. The tire of at least one of the previous claims wherein said rubber reinforcing carbon black has an Iodine absorption value in a range of from 40 to 85 g/kg and a DBP value in a range of from 70 to 125 cc/100g.

7. The tire of at least one of the previous claims wherein said rubber composition of said cord reinforced rubber carcass ply (7) underlying said outer sidewall rubber layer (6) contains rubber reinforcing carbon black, without the aforesaid carbon black, having an Iodine absorption value in a range of from 20 to 205 g/kg together with a DBP value in a range of from 62 to 150 cc/100g.

8. The tire of at least one of the previous claims wherein said rubber composition of said outer rubber sidewall layer (6) contains from 1 to 5 phr of said carbon black.

9. The tire of claim 8 wherein said rubber composition of said outer rubber sidewall layer (6) contains from 1 to 3 phr of said carbon black.

## Patentansprüche

1. Gummi-Luftreifen mit einer Seitenwand (5), die eine äußere Gummischicht (6) mit einer durchschnittlichen Dicke in einem Bereich von 2 bis 5 Millimeter aufweist, wobei die Kautschukzusammensetzung der äußeren Seitenwand-Gummischicht (6), auf Basis von Gewichtsteilen je 100 Gewichtsteile Kautschuk (ThK), enthält:
(A) mindestens 40 ThK Kautschukverstärkungs-Carbon Black, und
(B) 1 bis 10 ThK Carbon Black mit einem lodabsorptionswert (ASTM D1510) in einem Bereich von 700 bis 1150 g/kg und einem DBP(Dibutylphthalat)-Absorptionswert (ASTM D2414) in einem Bereich von 300 bis 550 cc/100g,
und wobei die äußere Gummischicht (6) einen spezifischen elektrischen Durchgangswiderstand von weniger als 20.000 Ohm-cm aufweist.

2. Reifen nach Anspruch 1, wobei das Carbon Black weiter eine Stickstoffoberfläche (BET) in einem Bereich von 850 bis 1000 m²/g aufweist.

3. Reifen nach Anspruch 1 oder 2, wobei die besagte äußere Seitenwand-Gummischicht (6) über einer kordverstärkten Gummi-Karkassenlage (7) liegt, wobei die Kautschukzusammensetzung dieser Karkassenlage (7) einen spezifischen elektrischen Durchgangswiderstand von höher als 20.000 Ohm-cm aufweist.

4. Reifen nach mindestens einem der vorgenannten Ansprüche, wobei die Kautschukzusammensetzung der äußeren Seitenwand-Gummischicht (6) einen Weg des geringsten elektrischen Widerstands für die Reifenseitenwand (5) in der besagten äußeren Seitenwand-Gummischicht (6) bereitstellt.

5. Reifen nach mindestens einem der vorgenannten Ansprüche, wobei das Carbon Black einen lodabsorptionswert in einem Bereich von 950 bis 1150 g/kg zusammen mit einem DBP-Wert in einem Bereich von 320 bis 420 cc/100 g aufweist.

6. Reifen nach mindestens einem der vorgenannten Ansprüche, wobei das Kautschukverstärkungs-Carbon Black einen lodabsorptionswert in einem Bereich von 40 bis 85 g/kg und einen DBP-Wert in einem Bereich von 70 bis 125 cc/100 g aufweist.

7. Reifen nach mindestens einem der vorgenannten Ansprüche, wobei die Kautschukzusammensetzung der kordverstärkten Gummi-Karkassenlage (7), die unter der äußeren Seitenwand-Gummischicht (6) liegt, Kautschukverstärkungs-Carbon Black enthält, ohne das vorgenannte Carbon Black, mit einem lodabsorptionswert in einem Bereich von 20 bis 205 g/kg zusammen mit einem DBP-Wert in einem Bereich von 62 bis 150 cc/100g.

8. Reifen nach mindestens einem der vorgenannten Ansprüche, wobei die Kautschukzusammensetzung der äußeren Seitenwand-Gummischicht (6) 1 bis 5 ThK besagten Carbon Blacks enthält.

9. Reifen nach Anspruch 8, wobei die Kautschukzusammensetzung der äußeren Seitenwand-Gummischicht (6) 1 bis 3 ThK besagten Carbon Blacks enthält.

## Revendications

1. Bandage pneumatique en caoutchouc comprenant un flanc (5) possédant une couche de caoutchouc externe (6) dont l'épaisseur moyenne se situe dans la plage de 2 à 5 mm, la composition de caoutchouc de ladite couche externe de flanc de caoutchouc (6) contenant, basées sur des parties en poids par 100 parties en poids de caoutchouc (phr) :
(A) au moins 40 phr de noir de carbone pour le renforcement du caoutchouc ; et
(B) de 1 à 10 phr de noir de carbone possédant une valeur d'absorption de l'iode (norme ASTM D1510) dans la plage de 700 à 1150 g/kg et une valeur d'absorption du dibutylphtalate (DBP) (norme ASTM D2414) dans la plage de 300 à 550 cm³/100 g,
et dans lequel la couche externe en caoutchouc (6) possède une résistivité en volume inférieure à 20 000 ohm-cm.

2. Bandage pneumatique selon la revendication 1, dans lequel ledit noir de carbone possède en outre une aire de surface par adsorption d'azote (BET) dans la plage de 850 à 1000 m²/g.

3. Bandage pneumatique selon la revendication 1 ou 2, dans lequel ladite couche externe de flanc en caoutchouc (6) recouvre une nappe de carcasse en caoutchouc (7) renforcée avec des câblés, la composition de caoutchouc de ladite nappe de carcasse (7) possédant une résistivité en volume supérieure à 20 000 ohm-cm.

4. Bandage pneumatique selon au moins une des revendications précédentes, dans lequel ladite composition de caoutchouc de ladite couche externe de flanc en caoutchouc (6) procure une voie de résistivité en volume minimale pour le flanc de bandage pneumatique (5) dans ladite couche externe de flanc en caoutchouc (6).

5. Bandage pneumatique selon au moins une des revendications précédentes, dans lequel ledit noir de carbone possède une valeur d'absorption de l'iode dans la plage de 950 à 1150 g/kg conjointement avec une valeur DBP dans la plage de 320 à 420 cm³/100 g.

6. Bandage pneumatique selon au moins une des revendications précédentes, dans lequel ledit noir de carbone pour le renforcement du caoutchouc possède une valeur d'absorption de l'iode dans la plage de 40 à 85 g/kg conjointement avec une valeur DBP dans la plage de 70 à 125 cm³/100 g.

7. Bandage pneumatique selon au moins une des revendications précédentes, dans lequel ladite composition de caoutchouc de ladite nappe de carcasse en caoutchouc (7) renforcée avec des câblés sous-jacente à ladite couche externe de flanc en caoutchouc (6) contient du noir de carbone pour le renforcement du caoutchouc , en l'absence du noir de carbone susmentionné possédant une valeur d'absorption de l'iode dans la plage de 20 à 205 g/kg conjointement avec une valeur DBP dans la plage de 62 à 150 cm³/100 g.

8. Bandage pneumatique selon au moins une des revendications précédentes, dans lequel ladite composition de caoutchouc de ladite couche externe de flanc en caoutchouc (6) contient ledit noir de carbone à concurrence de 1 à 5 phr.

9. Bandage pneumatique selon la revendication 8, dans lequel ladite composition de caoutchouc de ladite couche externe de flanc en caoutchouc (6) contient ledit noir de carbone à concurrence de 1 à 3 phr.
